Europäisches Patentamt

European Patent Office

Office européen des brevets

(11) Veröffentlichungsnummer: **0 444 300 A2**

## (12) EUROPÄISCHE PATENTANMELDUNG

(21) Anmeldenummer: **90125172.8**

(22) Anmeldetag: **21.12.90**

(51) Int. Cl.5: **F41G 1/387**

(30) Priorität: **24.02.90 DE 9002215 U**
**24.02.90 DE 9002214 U**

(43) Veröffentlichungstag der Anmeldung:
**04.09.91 Patentblatt 91/36**

(84) Benannte Vertragsstaaten:
**AT BE CH DE ES FR GB IT LI SE**

(71) Anmelder: **Repa, Otto**
**Brandeckerstrasse 9**
**W-7238 Oberndorf(DE)**

(72) Erfinder: **Repa, Otto**
**Brandeckerstrasse 9**
**W-7238 Oberndorf(DE)**

(54) **Zielfernrohrmontage.**

(57) Die Zielfernrohrmontage besteht aus einem das Zielfernrohr (15) tragenden Sockel (1) mit einer einseitigen, eine Montageschiene (12) der Waffe umgreifenden Hakenschiene (2) und einem der Hakenschiene (2) gegenüberliegenden, am Sockel (1) schwenkbar gelagerten, federbelasteten Klemmhaken (3). Mit Hilfe eines Spannhebels (11) ist der Klemmhaken (3) gegen die Montageschiene (12) anpressbar. Durch Überschreiten der Totpunktlage zwischen Spannhebel (11) und einer auf den Klemmhaken (3) wirkenden Zugstange (8) wird der Klemmhaken (3) in der Anpreßstellung arretiert. Zum Schutz gegen Beschädigungen ist das Zielfernrohr (15) bzw. die Zielfernrohrmontage (2, 3) von einem an der Zielfernrohrmontage (2, 3) befestigten Mantel (16, 17) umgeben.

FIG. 1

EP 0 444 300 A2

Die Erfindung betrifft eine Zielfernrohrmontage zum lösbaren Befestigen eines Zielfernrohrs auf einer Montageschiene, die auf einer Handfeuerwaffe angebracht ist und oberseitig einen schwalbenschwanzförmigen Querschnitt aufweist.

Zum Befestigen des Zielfernrohrs auf einer Waffe sind verschiedene "Montagen" bekannt. So gibt es neben der dominierenden Schwenkmontage insbesondere Einhak-Montagen, Aufkipp- und Aufschub- beziehungsweise Aufsetz-Montagen. Jede dieser Montagearten hat für den jeweiligen Verwendungszweck der Waffe ihre besonderen Vorteile. Die Erfindung beschäftigt sich mit der Zielfernrohr-Montage, bei der auf der Handfeuerwaffe bereits die oben angeführte Montageschiene angebracht ist. Zum Aufschieben des Zielfernrohrs auf diese Schiene dienen bisher, je nach Zielfernrohrart, Schraubbacken oder Klemmringe, wobei diese Montageteile jeweils unterseitig schwalbenschwanzförmig ausgebildete Klemmbacken aufweisen, die mittels einer Gewindespindel an die Montageschiene anzupressen sind.

Wie die Praxis gezeigt hat, ist diese Befestigungsart des Zeilfernrohrs an der Montageschiene unzweckmäßig und ungenau. Die Anpreßkraft der Klemmbacken an die Montageschiene ist frei dem Schützen überlassen. Hierbei kann die Preßkraft zu niedrig, aber auch zu hoch sein. Im ersteren Falle ist kein einwandfreier Sitz des Zielfernrohrs an der Waffe gewährleistet, im zweiten Falle können Schäden an den Montageteilen entstehen. Zu beachten ist, daß all diese Zielfernrohr-Befestigungsteile recht feingliedrig sein müssen, einfach schon deshalb, weil bei den üblichen Montagen der Raum für eine robuste Ausführung dieser Teile fehlt. Weiter ist zu bemängeln, daß das Befestigen des Zielfernrohrs bei den bekannten Montagen verhältnismäßig viel Zeit erfordert, ein Umstand, der diese Art Montage für Militärwaffen unzulässig macht.

Ein weiterer Nachteil der bekannten Zielfernrohrmontagen und Zielfernrohre, ganz allgemein optische Visiere, besteht darin, daß sie allein schon durch die eingebauten optischen Gläser, wie auch durch ihren feingliedrigen Aufbau, nur geringe Stoßbelastungen aufnehmen können. Sie sollten daher, werden die Waffen nicht benutzt, von der Waffe abgenommen und in einem separaten schützenden Futteral untergebracht werden. Ist das bei reinen Sportwaffen noch denkbar, so verbietet es sich schon bei Jagdwaffen und insbesondere bei Militärwaffen. Hier muß das Zielfernrohr für den sofortigen Gebrauch auf der Waffe verbleiben und ist demzufolge den im Gebrauch unvermeidlichen Stoßbelastungen ausgesetzt. Zwar versuchen die Schützen selbstverständlich, solche Schläge insbesondere vom Zielfernrohr fernzuhalten, jedoch ist dies nicht immer möglich. Bei Militärwaffen muß sogar davon ausgegangen werden, daß derartige Stoßbelastungen nahezu die Regel sind.

Die Erfindung stellt sich die Aufgabe, eine Zielfernrohrmontage anzugeben, welche die genannten Nachteile behebt, die also den stets sicheren Sitz des Zielfernrohrs auf der Montageschiene ohne Beschädigung der einzelnen Teile garantiert und die dieses Befestigen auch in kürzester Zeit zuläßt. Ferner sollen das Zielfernrohr und die Elemente der Zielfernrohrmontage vor Schlägen und Stoßbeanspruchungen geschützt werden.

Gemäß der Erfindung wird die Aufgabe gelöst durch einen Sockel, auf dem das Zielfernrohr aufzubauen ist, der einseitig an seiner Unterseite mit einer Hakenschiene versehen ist sowie durch einen dieser Hakenschiene gegenüberliegenden, verschwenkbar im Sockel gelagerten, federbelasteten Klemmhaken.

Nicht mehr also wie bisher werden KLemmbacken manuell über eine Gewindespindel an die schwalbenschwanzförmige Montageschiene angepreßt, sondern es wird ein federbelasteter Klemmhaken mit stets gleichbleibendem Druck an die Montageschiene angedrückt. Dieses Andrücken sichert nicht nur den sicheren Sitz des Sockels und damit des Zielfernrohrs an der Montageschiene, sondern bewirkt auch, daß der Sockel auf die Aufsetzplatte der Montageschiene, also in Richtung auf die Waffe zu, gezogen wird und damit nicht nur sicher, sondern auch in korrekter Lage auf dieser Montageschiene aufliegt.

Zum Aufsetzen des erfindungsgemäßen Sockels auf die Montageschiene kann der Klemmhaken vorderseitig angeschrägt sein, so daß der Sockel einfach auf die Montageschiene aufgeschoben werden kann. Dies ist jedoch, insbesondere wenn diese Teile verschmutzt sind, unzweckmäßig. Es wird daher nach der Erfindung weiterhin vorgeschlagen, daß der Klemmhaken jenseits seiner Lagerung mit einer Druckplatte verbunden ist, die bei Eindrücken den Klemmhaken verschwenkt, so daß der Sockel von oben auf die Montageschiene aufgesetzt werden kann. Diese Montageart kann auch noch in erfindungsgemäßer Weise erleichtert werden dadurch, daß jenseits der Druckplatte ein L-förmiger Spannhebel gelagert ist, an dessen kurzen Hebel eine die Druckplatte durchquerende Zugstange angelenkt ist, so daß durch Verschwenken des Spannhebels die Druckplatte angezogen und damit der Klemmhaken in die "Offen"- Stellung verschwenkt wird. Bei dieser Konstruktion kann auch noch eine auf der Druckplatte aufsitzende Druckfeder raumsparend untergebracht werden, indem diese Druckfeder, vorteilhafterweise ein Tellerfederpaket, auf der Zugstange angeordnet wird. Hierbei soll die Mittellinie zwischen dem Kugeldruckstück und dem Anlenkpunkt der Zugstange und damit die Wirkungslinie der Federkraft zwischen der Lagerung des Klemmhakens und derjenigen des Spannhebels liegen, wodurch eine automatische Verriegelung des Spannhebels in der Gebrauchslage erfolgt.

Der selbstarretierende Charakter der Klemmung ist ein wesentliches Merkmal der Erfindung. Durch die Tellerfedern entsteht eine Verspannung über den Spannhebel in Verbindung mit der Zugstange und dem Kugeldruckstück auf den Klemmhaken und die Montageschiene. Beim Überschreiten der Totpunktlage bzw. der Verbindungslinie zwischen dem Gelenkpunkt des Kugeldruckstücks und dem Anlenkpunkt des Spannhebels ensteht ein Kraftmoment, das den Spannhebel gegen seinen Anschlag am Sockel drückt.

Insgesamt ergibt sich somit eine Zielfernrohrmontage, die nicht nur die sichere Befestigung des Zielfernrohrs auf der Montageschiene ohne Beschädigung der einzelnen Teile gewährleistet, sondern die auch eine schnelle Befestigung des Zeilfernrohrs auf dieser Montageschiene zuläßt.

Der Schutz des Zielfernrohrs und der Zielfernrohrmontage vor Schlägen beziehungsweise Stoßbeanspruchungen wird gemäß der Erfindung durch einen an der Zielfernrohrmontage oder am Lauf/Verschlußkammer lösbar zu befestigenden, das Zielfernrohr in geringem Abstand übergreifenden, aus unnachgiebigem Material bestehenden Mantel erreicht.

Nicht mehr also wie bisher muß das Zielfernrohr von der Waffe abgenommen werden, um es beim rauhen Gebrauch vor Stoßbelastungen zu schützen, sondern es kann zum sofortigen Gebrauch auf der Waffe verbleiben, wird dort jedoch durch einen es umgebenden, unnachgiebigen Mantel geschützt. Um Druck auf das Zielfernrohr, auch bei Verschmutzung, zu vermeiden, soll sich der Mantel in geringem Abstand vom montierten Zielfernrohr befinden.

Der Erfindungsgedanke wird dadurch nicht verlassen, daß der Mantel zweigeteilt ist, in ein vorderes und ein hinteres Mantelteil. Hierdurch wird die Einstellung des Zielfernrohrs, die sich üblicherweise in der Mitte des Fernrohres befindet, ermöglicht.

Im einfachsten Falle kann der Mantel beziehungsweise können die Mantelteile direkt auf der Montage oder an entsprechenden Befestigungspunkten des Laufes beziehungsweise der Verschlußkammer angeschraubt sein.

Dies setzt jedoch voraus, daß das Zielfernrohr in seiner Längsrichtung aus dem Mantel herausgezogen werden kann. Bei den üblichen Montagen für optische Zieleinrichtungen ist dies jedoch nicht möglich. Hier wird nach der Erfindung vorgeschlagen, daß der Mantel beziehungsweise die Mantelteile an den Unterkanten mit nach innen vorstehenden Längsschienen und die Montage mit entsprechend angebrachten Nuten zum Aufschieben des Mantels beziehungsweise der Mantelteile versehen ist. Damit kann der Mantel bis zu einem Anschlag über das montierte Zielfernrohr hinweggeschoben und in dieser Lage, beispielsweise durch eine Kugelrast, gesichert werden. Gleiches ist selbstverständlich auch möglich, indem der Mantel von oben über das Zielfernrohr übergestülpt und in der Gebrauchslage wiederum verrastet wird.

Eine weitere Möglichkeit wird nach der Erfindung dadurch angegeben, daß einerseits an einer Unterkante des Mantels beziehungsweise der Mantelteile und andererseits an der Montage beziehungsweise am Lauf/Verschlußkammer ein Klappscharnier angebracht ist, so daß der Mantel zum Aufsetzen des Zielfernrohrs weggeklappt und anschließend über das Zielfernrohr übergeklappt werden kann. Diese Lösung hat den Vorteil, daß der Mantel beziehungsweise die Mantelteile stets mit der Waffe verbunden bleiben, also nicht verlorengehen können.

Von Vorteil ist auch, daß der Mantel (beziehungsweise die Mantelteile) aus geringfügig federndem Material ist, so daß er sich in der Gebrauchslage fest an seine Befestigungsteile anlegt.

Um das Gewicht der mit diesem Mantel versehenen Waffe nicht zu sehr zu erhöhen und damit die Handhabung der Waffe zu erschweren, sollte außerdem der Mantel aus Leichtmetall sein.

Auf der Zeichnung ist ein Ausführungsbeispiel des Erfindungsgegenstandes schematisch dargestellt, und zwar zeigen:

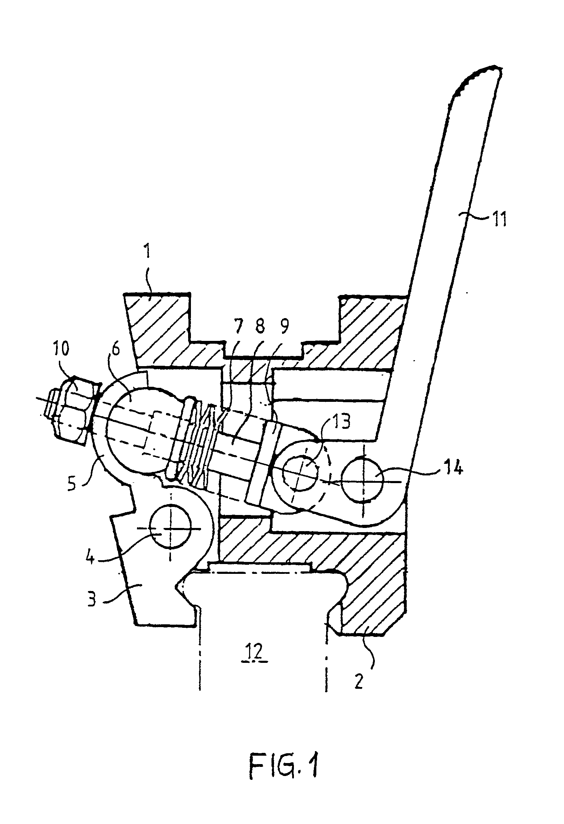

Fig. 1 einen Querschnitt durch die Zielfernrohrmontage,

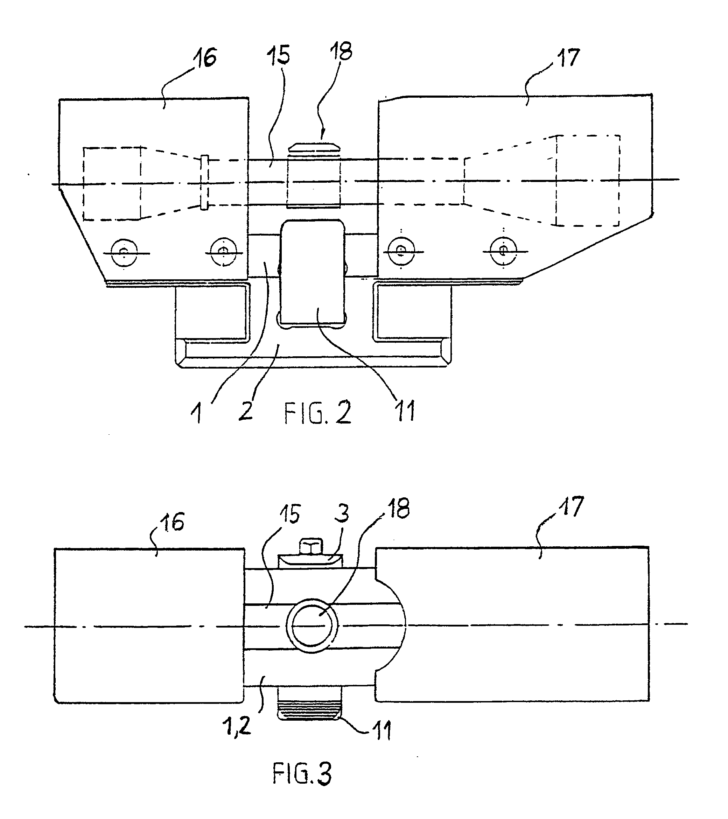

Fig. 2 eine Seitenansicht der Zielfernrohrmontage und des Zielfernrohrs, abgedeckt durch einen Mantel und

Fig. 3 eine Draufsicht auf den Mantel nach Fig. 2

An einem Sockel (1), auf dem das Zielfernrohr fest zu fixieren ist, ist unterseitig eine Hakenschiene (2) vorgesehen, der ein verschwenkbarer Klemmhaken (3) gegenüberliegt. Der Klemmhaken (3) ist in einem Lagerzapfen (4) gelagert und jenseits dieser Lagerung mit einer kugelkalottenförmigen Druckplatte (5) verbunden. In diese kugelkalottenförmige Druckplatte (5) greift ein kugelförmiges Druckstück (6) eines Tellerfederpakets (7) ein, das auf einer Zugstange (8) angeordnet ist und sich jenseits an einem Bund (9) abstützt. Die Zugstange (8) durchdringt das kugelkalottenförmige Druckstück (5) und ist durch eine Mutter (10) in dieser Lage gesichert. Jenseits ist die Zugstange (8) an den kurzen Hebel eines L-förmigen Spannhebels (11) angelenkt (13). Der Spannhebel (11) ist in einem Gelenkpunkt (14) des Sockels (1) schwenkbar gelagert.

Im (gezeichneten) Gebrauchszustand ist der Spannhebel (11) hochgeklappt, so daß sich die Kraft des Tellerfederpakets (7) zwischen dem Bund (9) und der kugelkalottenförmigen Druckplatte (5) auswirken kann. Dadurch wird der Klemmhaken (3) in Richtung auf die (strichpunktiert eingezeichnete) Montageschiene (12) verschwenkt bzw. auf die schwalbenschwanzförmige Ausbildung dieser Montageschiene (12) aufgedrückt. Gleichzeitig wird auch der Sockel (1) nach unten auf die Aufsitzplatte der Montageschiene (12) gezogen. Damit ist ein sicherer Sitz des Sockels (1) und damit auch des auf ihm befestigten Zielfernrohrs auf der Waffe gewährleistet. Gleichzeitig wird auch der Spannhebel (11) durch die Kraftwirkung der Druckfeder (des Tellerfederpakets 7), deren Wirkungslinie zwischen der Lagerung (4) des Klemmhakens (3) und derjenigen des Spannhebels (11) liegt, an einen Anschlag geführt bzw. in dieser Gebrauchslage sicher gehalten. Zum Entfernen des Sockels von der Waffe muß lediglich der Spannhebel (11) verschwenkt werden, so daß dann die Zugstange (8) über die Mutter (10), die Druckplatte (5) und damit auch den gesamten Klemmhaken (3) verschwenkt. Dadurch kann der gesamte Sockel mit aufgebautem Zielfernrohr ohne weitere Maßnahme von der Waffe abgenommen werden. Insgesamt ergibt sich damit nicht nur eine Schnellmontage des Zielfernrohrs, sowohl zum Aufsetzen des Zielfernrohrs auf die Waffe, wie auch zum Abnehmen, sondern auch eine äußerst sichere Befestigung dieses optischen Visiers.

Das Zielfernrohr (15) bzw. die Zielfernrohrmontage (2, 3) ist mit Abstand von zwei Mantelteilen (16, 17) umgeben, die mechanische Schäden von dem Zielfernrohr und der Zielfernrohrmontage fernhalten. Die Zweiteilung des Mantels (16, 17) ermöglicht hierbei das Bedienen der Einstellung (18) des Zielfernrohres (15).

Die erfindungsgemäße Ummantelung des Zielfernrohrs bzw. der Zielfernrohrmontage ist nicht beschränkt auf das Ausführungsbeispiel, sondern kann ganz allgemein bei Zielfernrohren mit Vorteil angewendet werden.

## Patentansprüche

1. Zielfernrohrmontage zum lösbaren Befestigen eines Zielfernrohrs auf einer Montageschiene, die auf einer Handfeuerwaffe angebracht ist und oberseitig einen schwalbenschwanzförmigen Querschnitt aufweist, gekennzeichnet durch einen Sockel (1), auf den das Zielfernrohr aufzubauen ist, der einseitig an seiner Unterseite mit einer Hakenschiene (2) versehen ist sowie durch einen dieser Hakenschiene (2) gegenüberliegenden, verschwenkbar im Sockel (1) gelagerten, federbelasteten Klemmhaken (3).

2. Zielfernrohrmontage nach Anspruch 1, dadurch gekennzeichnet, daß der Klemmhaken (3) jenseits seiner Lagerung (4) mit einer Druckplatte (5) verbunden ist.

3. Zielfernrohrmontage nach Anspruch 2, dadurch gekennzeichnet, daß zwischen Druckplatte (5) und Sockel (1) eine Druckfeder (7) eingefügt ist.

4. Zielfernrohrmontage nach Anspruch 1, dadurch gekennzeichnet, daß jenseits der Druckplatte (5) ein L-förmiger Spannhebel (11) gelagert ist, an dessen kurzen Hebel eine die Druckplatte (5) durchquerende Zugstange (8) angelenkt ist.

5. Zielfernrohrmontage nach Anspruch 4, dadurch gekennzeichnet, daß auf der Zugstange (8) sich an einem auf ihr angebrachten Bund (9) abstützend eine auf die Druckplatte (5) einwirkende Druckfeder (7) angeordnet ist.

6. Zielfernrohrmontage nach Anspruch 5, dadurch gekennzeichnet, daß die Druckplatte (5) als Kugelkalotte ausgebildet und die Druckfeder (7) endständig mit einem Kugeldruckstück (6) versehen ist.

7. Zielfernrohrmontage nach einem oder mehreren der vorhergehenden Ansprüche, dadurch gekennzeichnet, daß die Druckfeder (7) ein Tellerfederpaket ist.

8. Zielfernrohrmontage nach einem oder mehreren der vorhergehenden Ansprüche, dadurch gekennzeichnet, daß im geschlossenen Zustand des Spannhebels (11) der Anlenkpunkt (13) der Zugstange (8) unterhalb der Verbindungslinie zwischen dem Mittelpunkt des Kugeldruckstückes (6) und dem Gelenkpunkf (14) des Spannhebels (11) liegt.

9. Zielfernrohrmontage nach einem oder mehreren der vorhergehenden Ansprüche, dadurch gekennzeichnet, daß die Mittellinie zwischen dem Kugeldruckstück (6) und dem Anlenkpunkt (13) der Zugstange (8) und damit die Wirkungslinie der Federkraft zwischen der Lagerung (4) des Klemmhakens (3) und derjenigen (14) des Spannhebels (11) liegt.

10. Zielfernrohrmontage bzw. Zielfernrohr für Handfeuerwaffen, insbesondere nach Anspruch 1, gekennzeichnet durch einen an der Zielfernrohrmontage (2, 3) oder am Lauf/Verschlußkammer lösbar zu befestigenden, das Zielfernrohr (15) in geringem Abstand übergreifenden, aus unnachgiebigem Material bestehenden Mantel (16, 17).

11. Zielfernrohrmontage bzw. Zielfernrohr nach Anspruch 10, dadurch gekennzeichnet, daß der Mantel (16, 17) in ein vorderes (16) und ein hinteres (17) Mantelteil zweigeteilt ist.

12. Zielfernrohrmontage bzw. Zielfernrohr nach Anspruch 10 oder 11, dadurch gekennzeichnet, daß der Mantel (die Mantelteile 16, 17) an seinen Unterkanten mit nach innen vorstehenden Längsschienen und die Zielfernrohrmontage (2, 3) mit entsprechend angebrachten Nuten zum Aufschieben des Mantels (der Mantelteile 16, 17) versehen ist.

13. Zielfernrohrmontage bzw. Zielfernrohr nach Anspruch 10 oder 11, dadurch gekennzeichnet, daß einerseits an einer Unterkante des Mantels (der Mantelteile 16, 17) und andererseits an der Zielfernrohrmontage (2, 3) beziehungsweise dem Lauf/Verschlußkammer ein Klappscharnier angebracht ist.

14. Zielfernrohrmontage bzw. Zielfernrohr nach einem oder mehreren der vorhergehenden Ansprüche, dadurch gekennzeichnet, daß der Mantel (die Mantelteile 16, 17) aus geringfügig federndem Material ist.

15. Zielfernrohrmontage bzw. Zielfernrohr nach einem oder mehreren der vorhergehenden Ansprüche, dadurch gekennzeichnet, daß der Mantel (die Mantelteile 16, 17) aus Leichtmetall ist.

FIG. 1

16  15  18  17

1  2  FIG. 2  11

16  15  3  18  17

1,2  11

FIG.3